# EUROPEAN PATENT SPECIFICATION

(11) **EP 4 459 779 B1**
(45) Date of publication and mention of the grant of the patent: **26.08.2026**
(21) Application number: 23875210.9
(22) Date of filing: 04.10.2023
(51) Int. Cl.: H01M 50/517, H01M 50/213, H01M 50/242, H01M 10/659

(54) **WELDLESS BATTERY MODULE**
UNGESCHWEISSTES BATTERIEMODUL
MODULE DE BATTERIE SANS SOUDURE

(30) Priority: 05.10.2022 KR 20220126767
(43) Date of publication of application: 06.11.2024
(73) Proprietor: LG Energy Solution, Ltd., Seoul 07335 (KR)
(72) Inventor: OH, Sung Jin, Daejeon 34122 (KR)
(74) Representative: Plasseraud IP
(86) International application number: PCT/KR2023/015247
(87) International publication number: WO 2024/076147

(56) References cited:
- CN-A- 106 711 384
- CN-U- 211 858 784
- CN-U- 211 858 784
- JP-A- 2016 018 634
- KR-A- 20100 045 079
- KR-A- 20100 071 055
- KR-A- 20180 106 687
- US-A1- 2022 069 422

## Description

### [Technical Field]

This application claims the benefit of priority to Korean Patent Application No. 10-2022-0126767 filed on October 5, 2022.

The present invention relates to a weldless battery module. More particularly, the present invention relates to a weldless battery module or battery pack configured such that a battery cell and a busbar are electrically connected to each other without welding.

### [Background Art]

Depending on the shape of a battery case, lithium secondary batteries are classified into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of an aluminum laminate sheet. Thereamong, the cylindrical secondary battery has the advantages of relatively large capacity and structural stability.

A battery module and/or battery pack including a plurality of battery cells electrically connected to each other is widely utilized as a large-capacity, high-power energy source. Safety issues in electrical energy sources are constantly being raised, and the use of a cylindrical battery cell, which exhibits high safety, is increasing.

In order to manufacture a battery module/battery pack, a process of electrically connecting a plurality of cylindrical battery cells to each other is required. For example, positive electrode terminals and negative electrode terminals of the cylindrical battery cells may be connected by wire bonding or directly welded to a busbar.

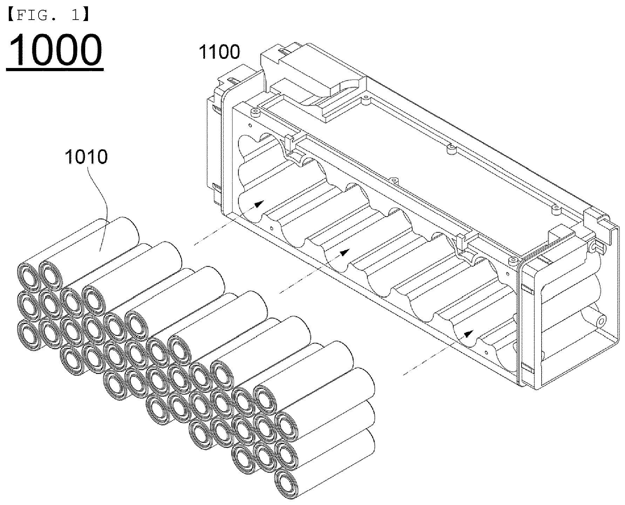

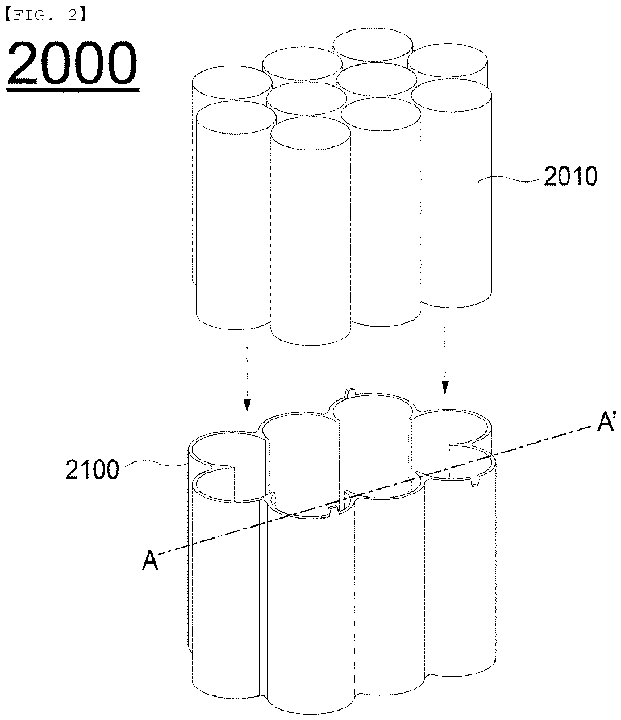

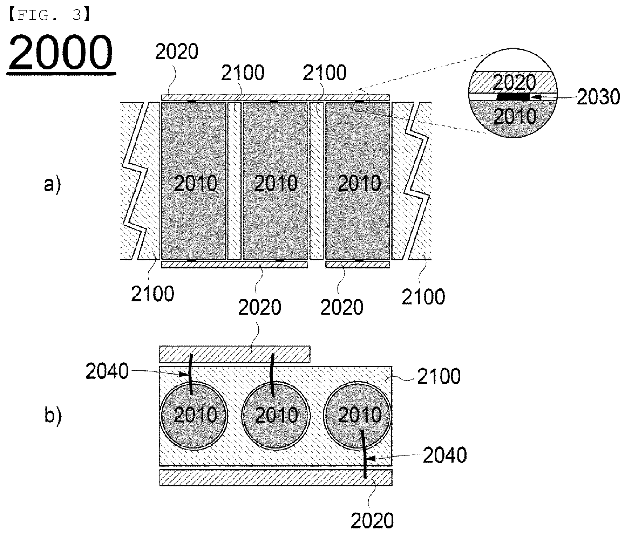

FIG. 1 is an exploded perspective view of an example of a conventional battery module, FIG. 2 is an exploded perspective view of another example of the conventional battery module, and FIG. 3 is a vertical sectional view taken along A-A of FIG. 2 with a busbar (a) and a view showing a modification thereof (b).

Referring to FIGs. 1 to 3, the conventional battery module 1000 or 2000 is configured such that a plurality of cylindrical battery cells 1010 or 2010 is received in a module case 1100 or 2100. In a) of FIG. 3, a busbar 2020 is added and is electrically connected, by welding 2030, to upper end and lower end electrode terminals of the cylindrical battery cells 2010 seated in the module case 2100. In FIG. 3, which is a sectional view, the busbar 2020 may be disposed over upper surfaces or lower surfaces of a plurality of cylindrical battery cells 2010, or may be disposed at an upper surface or a lower surface of one cylindrical battery cell 2010, depending on series or parallel connection.

b) of FIG. 3, which is a top view, not a sectional view, shows an example of wire bonding. The upper end electrode terminal of the cylindrical battery cell 2010 and the busbar 2020 are electrically connected to each other via a wire 2040.

When wire bonding or busbar welding is performed, 1) weak welding may lead to weak physical bonding, and a weld may easily break due to impact such as vibration. 2) Currently, wire bonding or busbar welding is performed after all cylindrical battery cells are assembled and disposed in a battery module/battery pack, whereby it is not easy to improve spatial and time efficiency. 3) Wire bonding or busbar welding must be performed for all electrical connections, resulting in a high volume of work, a high probability of defects, and a complex device for manufacturing. Nevertheless, wire bonding and busbar welding are currently utilized because wire bonding and busbar welding are the only means of ensuring reliable and strong coupling for a long time in environments with vibration, impact, etc.

The underlying cause of such problems is that wire bonding and busbar welding, i.e., electrical connection, is achieved by welding. There is a need to provide a means to electrically couple battery cells in a battery module/battery pack in a reliable and strong way for a long time without welding.

Patent Document 1 discloses a battery module with improved connection scalability and cooling efficiency, and a battery pack including the same. The battery module of Patent Document 1 includes a plurality of cylindrical battery cells each having an electrode terminal formed at each of an upper part and a lower part thereof, a module housing having a plurality of hollow structured receiving portions configured to receive the cylindrical battery cells by insertion, a current collection plate mounted on an outer surface of the module housing, the current collection plate having a plurality of weld holes formed to expose the electrode terminals of the cylindrical battery cells to the outside, a busbar disposed in contact with each of the electrode terminal and the current collection plate to electrically connect the electrode terminals and the current collection plate to each other, and a heat conduction pad disposed outside the current collection plate, the heat conduction pad having a contact projection extending in a direction in which the electrode terminal is located to contact a contact connection part between the electrode terminal and the busbar.

Patent Document 1 contemplates scalability, but still includes a plurality of weld holes, which does not solve the conventional fundamental problems.

Patent Document 2 discloses a battery pack including a plurality of cylindrical battery cells electrically connected to each other. In Patent Document 2, the battery cells are disposed in a module case including receiving portions each having an inner shape corresponding to the outer shape of the battery cell such that electrode terminals of identical electrodes are oriented in the same directions, each of the electrode terminals is electrically connected to a connection plate via a connection member, the connection member includes a safety device configured to block the flow of excessive current, and the connection member further includes an elastic member.

In Patent Document 2, a plate-shaped first connection member 131 having a curved shape, which may be commonly seen in a remote controller, etc. that uses a cylindrical battery, is included. The object of Patent Document 2 is to provide a fuse through the first connection member, and no welding is shown. Even assuming that welding is not used, it seems that connection plates 121 and 122, which are flat metal plates, configured to support the first connection member do not provide sufficient strength and vibration resistance. In addition, there is a problem that the plate-shaped first connection member 131 must be fixed to the connection plates 121 and 122 by welding using additional means.

Patent Document 3 discloses a probe card and an inspection method. The probe card 100 of Patent Document 3 includes a planar secondary battery 10 including a planar electrode 22, the planar electrode 22 being disposed to face a workpiece 50, and an electrical connection body 30 disposed between the workpiece 50 and the secondary battery 10. The secondary battery 10 includes a structure that allows a wire to be drawn from an arbitrary position of the planar electrodes 22. The electrical connection body 30 includes a plurality of contact portions 31 protruding toward opposing pads 51, and the plurality of pads 51 and the planar electrode 22 are electrically connected to each other via the plurality of contact portions 31 interposed therebetween.

In Patent Document 3, the electrical connection body may include a pogo-pin configured to contact the planar electrode. In Patent Document 3, the configuration of the pogo-pin that simply makes electrical contact is utilized, and the use of the pogo-pin in a battery module/battery pack is neither described nor implied.

The prior art documents do not suggest a solution to the problem that wire bonding and busbar welding, i.e., electrical connection, is achieved by welding, which is the underlying cause for current battery modules/cell packs. Examples of the background art can be found in CN 211 858 784 U and JP 2016 018634 A.

### (Prior Art Documents)

(Patent Document 1) Korean Patent Application Publication No. 2019-0083533 (2019.07.12)
(Patent Document 2) Korean Patent Application Publication No. 2019-0042990 (2019.04.25)
(Patent Document 3) Korean Patent Application Publication No. 2019-0029662 (2019.03.20)

### [Disclosure]

### [Technical Problem]

The present invention has been made in view of the above problems, and it is an object of the present invention to provide a weldless battery module/battery pack that 1) does not have the problem of weakening electrical coupling force due to weak welding, 2) efficiently proceeds with electrical connection of battery cells in the battery module/battery pack, and 3) has stable and strong electrical connection for a long time in environments with vibration, impact, etc.

### [Technical Solution]

In order to accomplish the above object, the present invention provides a battery module including a plurality of cylindrical battery cells, a module case accommodating the plurality of cylindrical battery cells therein, a cover coupled to at least one of open surfaces of the module case, metal plates coupled to the cover, and an electrical conduction member interposed between each of the plurality of cylindrical battery cells and a corresponding one of the metal plates for electrical connection, wherein the electrical conduction member includes a hollow cylindrical main body, an elastic body accommodated in the hollow cylindrical main body, and a pin disposed in the hollow cylindrical main body by insertion and being configured to protrude outward from the hollow cylindrical main body by a predetermined length while being supported by the elastic body.

The electrical conduction member is a pogo-pin. The electrical conduction member may include one of a single-sided pogo-pin or a double-sided pogo-pin, wherein the single-sided pogo-pin may include the pin at only one side of the hollow cylindrical main body, and the double-sided pogo-pin may include the pin provided at opposing sides of the hollow cylindrical main body.

The hollow cylindrical main body may include at least one of a screw thread, a hook, a catching projection, or a donut-shaped protrusion disposed on an outer surface of the hollow cylindrical main body.

The electrical conduction member may be coupled to the cover and extend therethrough, and the electrical conduction member may be coupled to the cover and extend therethrough by at least one of methods 1) to 5) below:
1) an interference fit, 2) a hook coupling, 3) a screw coupling, 4) a fusion, or 5) coupling between a coupling portion integrally formed with the electrical conduction member by injection molding and the cover using at least one of methods 1) to 4) above.

The cover and the metal plates may be coupled to each other by at least one of a thermal fusion or an interference fit.

The metal plates and the electrical conduction member may be configured to be coupled to each other after the module case having the plurality of cylindrical battery cells received therein and the cover are coupled to each other.

The module case may include an upper case and a lower case, and the upper case and the lower case may be separably coupled to each other.

The battery module may be filled with a phase change material (PCM) therein.

In addition, the present invention may provide various combinations of the above solving means.

### [Advantageous Effects]

As is apparent from the above description, in a weldless battery module according to the present invention, a cylindrical battery cell and a busbar, which is a metal plate, are connected to each other using a pogo-pin, which is a separate electrical conduction member. As the weldless battery module according to the present invention is used, 1) there is no problem of weak electrical coupling force due to weak welding, 2) electrical connection of battery cells in a battery module/battery pack may efficiently proceed, and 3) stable and strong electrical connection may be maintained for a long time in environments with vibration, impact, etc. In addition, it is possible to easily replace the pogo-pin, which is an electrical conduction member, when the pogo-pin is defective.

### [Description of Drawings]

FIG. 1 is an exploded perspective view of an example of a conventional battery module.
FIG. 2 is an exploded perspective view of another example of the conventional battery module.
FIG. 3 is a vertical sectional view taken along A-A of FIG. 2 with a busbar (a) and a view showing a modification thereof (b).
FIG. 4 is a sectional view of a battery module according to an embodiment of the present invention.
FIG. 5 is a view showing various modifications of a pogo-pin according to the present invention.
FIGs. 6 and 7 are views showing various modifications in which the pogo-pin is coupled to a cover in the battery module according to the present invention.
FIG. 8 is a view showing another modification in which the pogo-pin is coupled to the cover in the battery module according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

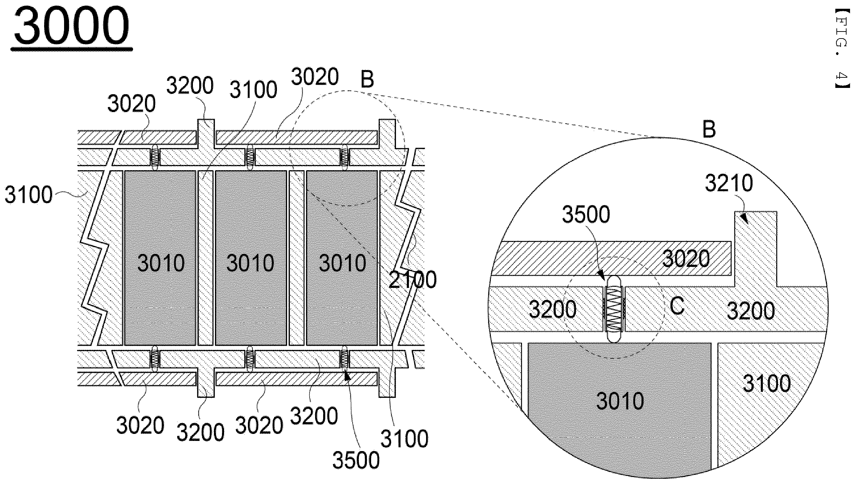

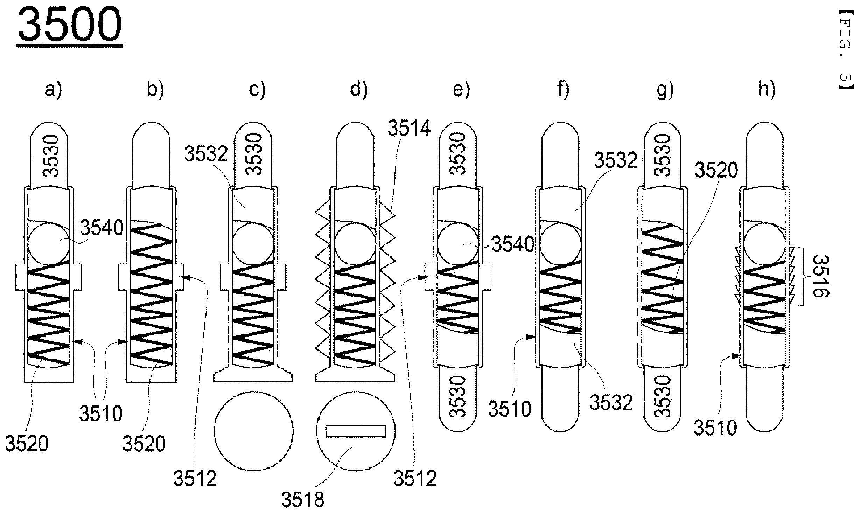

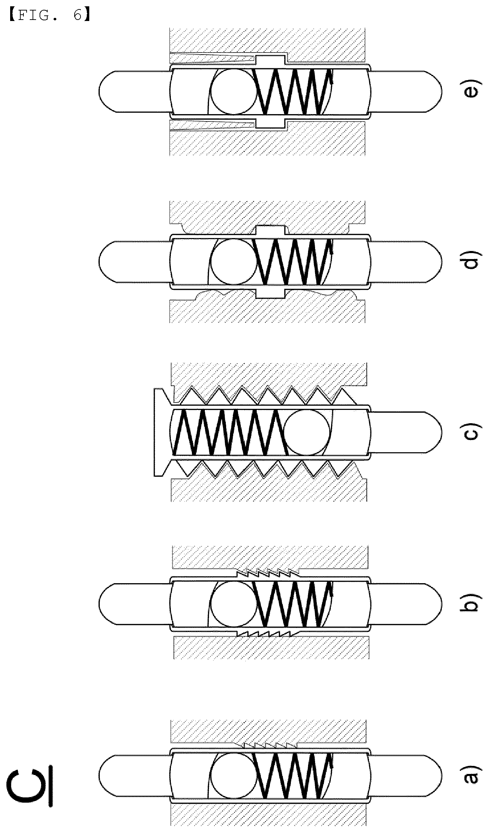

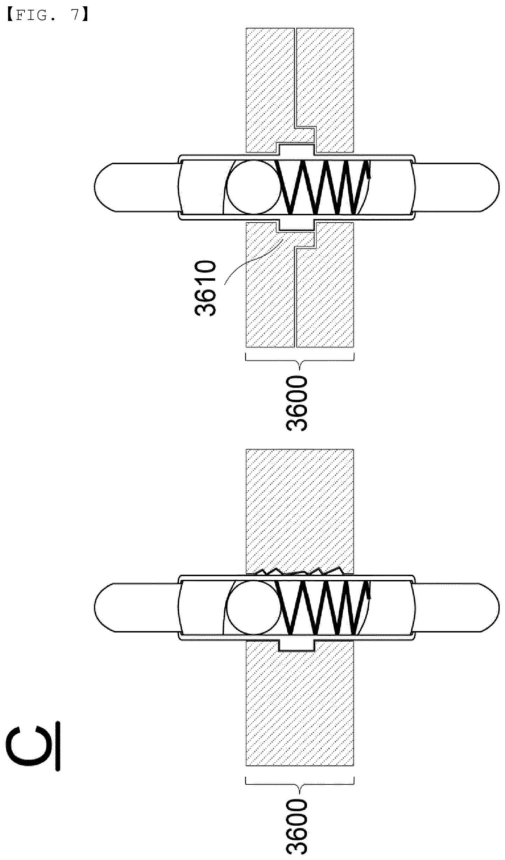

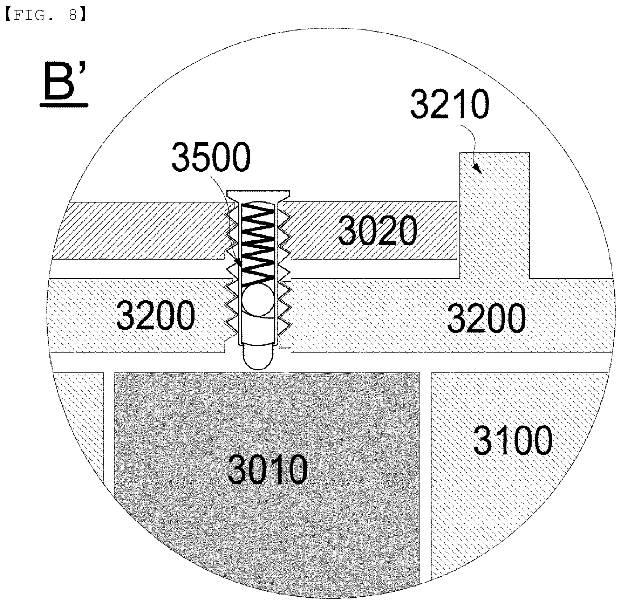

FIG. 4 is a sectional view of a battery module according to an embodiment of the present invention, FIG. 5 is a view showing various modifications of a pogo-pin according to the present invention, FIGs. 6 and 7 are views showing various modifications in which the pogo-pin is coupled to a cover in the battery module according to the present invention, and FIG. 8 is a view showing another modification in which the pogo-pin is coupled to the cover in the battery module according to the present invention. Embodiments of the present invention will be described in detail with reference to FIGs. 4 to 8.

The battery module according to the present invention includes a plurality of cylindrical battery cells 3010, a module case 3100 configured to receive the plurality of cylindrical battery cells 3010, a cover 3200 coupled to each of an upper surface and a lower surface of the module case 3100, busbars 3020, which are metal plates, coupled to the cover 3200, and a pogo-pin 3500, which is an electrical conduction member, interposed between each of the plurality of cylindrical battery cells 3010 and a corresponding one of the busbars 3020 for electrical connection.

The upper surface and the lower surface refer to the relative positions of the module case when the module case is disposed vertically. The upper surface refers to one surface, which is open, of the module case, and the lower surface refers to the other surface, which is opposite the one surface, of the module case. When the module case is formed such that only one surface of the module case is open, the cover may be disposed at the open one surface. When the module case is formed such that opposite surfaces of the module case are open, the cover may be disposed at each of the open opposite surfaces. When electrical connection is required at only one surface, the pogo-pin may be disposed at only the cover located at the one surface at which electrical connection is required.

The metal plate defined in the present invention is a busbar in the form of a metal plate used in a battery module and a battery pack.

Each of the plurality of cylindrical battery cells 3010 is configured to have a structure in which an electrode assembly is received in a cylindrical battery case made of a metal can. In FIGs. 4 and 8, the longitudinal center axes of the cylindrical battery cases are disposed in parallel in the module case 3100, and the cover 3200 is disposed at each of the upper surface and the lower surface of the module case 3100. The cover 3200 may be provided with a separate partition wall 3210, which may be used as a means configured to block electrical connection between the busbars 3020. In addition, the partition wall 3210 may also serve as a means configured to allow the busbar 3020 to be fit between the partition wall and another partition wall so as to be fixed therebetween.

The pogo-pin is an electrical conduction member. The pogo-pin 3500 includes a hollow cylindrical main body 3510, an elastic body 3520 provided in the main body 3510, and a pin 3530 disposed in the main body 3510 by insertion so as to protrude outward from the main body only to a predetermined length while being supported by the elastic body 3520. The pogo-pin 3500 may be one of a single-sided pogo-pin (a), b), c), and d) of FIG. 5), in which the pin 3530 is provided at only one side of the main body 3510, and a double-sided pogo-pin (e), f), g), and h) of FIG. 5), in which the pin 3530 is provided at each side of the main body 3510.

The single-sided pogo-pin 3500 has a single spring as the elastic body. The double-sided pogo pin may also have only one single spring as the elastic body. In the present invention, each example of the pogo-pin 3500 has one spring.

A metal ball 3540 is added between the elastic body 3520 and the pin 3530 to facilitate movement of the pogo-pin 3500. Among the pogo-pins 3500 shown in FIG. 5, each of the single-sided pogo-pins (a), b), c), and d) of FIG. 5) is configured such that the pin 3530 is seated on the elastic body 3520 via a pin support portion 3532 with the ball 3540 or without the ball. As illustrated, each of the double-sided pogo-pin (e), f), g), and h) of FIG. 5) is configured to have no ball or to have only one ball 3540. However, two balls 3540 may support two pins 3530. The figures show various modifications; however, the present invention is not limited thereto.

Although not shown in the figures, the pogo-pin may be a high-current pogo-pin depending on the capacity of the battery module that is used. In the high-current pogo-pin, each of the main body, through which current flows, the elastic body, and the pin is made of a material suitable for high temperature and high current or has an increased thickness.

At least one of a screw thread (d) of FIG. 5), a hook (h) of FIG. 5), a catching projection (c) of FIG. 5), and a donut-shaped protrusion (a), b), c), and d) of FIG. 5) may be provided at an outer surface of the main body 3510 of the pogo-pin 3500. When the screw threaded (d) of FIG. 5) is provided, the pogo-pin 3500 may be a single-sided pogo-pin, wherein a threaded head 3518, into which a Phillips head screwdriver, a flathead screwdriver, a hex key, etc. can be inserted for screw fastening, may be provided at the other side of the pin 3530 based on the main body 3510. In d) of FIG. 5, a recess for a flat screwdriver is provided.

The pogo-pin 3500 is coupled through the cover 3200. The pogo-pin may be coupled through the cover 3200 using at least one of the following methods 1) to 5).
1) Interference fit. In this case, a through-hole is provided in the cover 3200, and the size of the pogo-pin 3500 is set to be greater than the size of the through-hole, whereby the pogo-pin 3500 is coupled to the through-hole by interference fit. In FIG. 6, the left and right sides of the main body of the pogo-pin are shown differently in order to show various coupling methods. In a) of FIG. 6, the left side corresponds to interference fit. The through-hole or the pogo-pin may be surface-treated or deformed for friction.
   Referring to e) of FIG. 6, the through-hole is provided so as to have a step. The pogo-pin 3500 protrudes out of the cover 3200 through a fully penetrated part of the through-hole, and a protrusion 3512 of the pogo-pin is caught by the step provided around the fully penetrated part. An additional recess stopper may be coupled to a recess defined by the step provided around the fully penetrated part by interference fit, fusion, bonding, and adhesion.
2) Hook coupling. This is coupling using a hook provided on at least one of the pogo-pin 3500 and the cover 3200. The right side of a) of FIG. 6 and b) of FIG. 6 correspond to hook coupling. Hook coupling is typically performed only in one direction. Therefore, it is preferable to fasten the pogo-pin 3500 in a direction that penetrates the cover 3200.
3) Screw coupling. Referring to c) of FIG. 6 and d) of FIG. 5, a through-hole is provided in the cover 3200, and a screw thread 3514 is provided at each of the through-hole and in the main body 3510 of the pogo-pin 3500, whereby coupling is formed. When the screw thread 3514 is provided, the pogo-pin 3500 may be a single-sided pogo-pin, wherein a threaded head 3518, into which a Phillips head screwdriver, a flathead screwdriver, a hex key, etc. can be inserted for screw fastening, may be provided at the other side of the pin 3530 based on the main body 3510.

Referring to FIG. 4, the pogo-pin 3500 is coupled to cover 3200, and then the busbar 3020 is coupled to an upper surface thereof. Even in screw coupling, the pogo-pin 3500 is coupled to cover 3200, and then the busbar 3020 is coupled to the upper surface thereof in the same manner. Referring to FIG. 8, in screw coupling, the busbar 3020 may be first coupled to or seated on the cover 3200, and then the cover 3200 and the busbar 3020 may be simultaneously fixed using screw coupling of the pogo-pin 3500. In this case, the pogo pins 3500 may be easily replaced from the outside if the pogo-pin 3500 is defective in future.

Screw coupling may be conventional screw coupling or coupling performed by less than one turn of the screw due to a projection formed at the end. Although not shown in the figures, golf shoe spike coupling, which has been used in recent years, may be used as such an example.

4) Fusion. Referring to d) of FIG. 6, a through-hole is provided in the cover 3200, the pogo-pin 3500 is inserted into the through-hole, and the cover 3200 is coupled by fusion. A fusible cover may be coupled by melting, or coupling using a bond or an adhesive may also be used.

5) Coupling between a coupling portion 3600 (left side of FIG. 7) integrally formed with the pogo-pin 3500 by injection molding and the cover using the above methods 1) to 4). FIG. 7 shows the state in which the coupling portion 3600 is added to the pogo-pin 3500. The pogo-pin 3500 having the coupling portion 3600 added thereto is coupled using the above methods 1) to 4).

When injection-molded as a single body, the main body of the pogo-pin may be provided at the outer surface thereof with a donut-shaped protrusion (left side of the main body of the left pogo-pin in FIG. 7) or a hook or an uneven portion (right side of the main body of the left pogo-pin in FIG. 7) to increase the intensity of injection molding. The coupling portion 3600 is strongly coupled to the pogo-pin 3500 by injection molding, and the coupling portion 3600, which has increased width and size, is coupled to the cover 3200, whereby the force of coupling of the pogo-pin to the cover may be further increased.

The coupling portion may be coupled using another method other than injection molding, as in the right pogo-pin in FIG. 7. A step is provided at a penetrated part in the coupling portion 3600 and around the penetrated part. The pogo-pin 3500 protrudes outward through the penetrated part, and the protruding part of the pogo-pin is caught by the step provided around the penetrated part. An additional coupling portion stopper 3610 may be coupled to a recess defined by the step by interference fit, fusion, bonding, and adhesion.

Referring to FIGs. 4 and 8, the cover 3200 and the busbars 3020 may be coupled to each other by at least one of thermal fusion and interference fit.

The busbars and the pogo-pins may be coupled to each other after the module case having the plurality of cylindrical battery cells received therein and the cover are coupled to each other. The busbars and pogo-pins may be coupled to each other before or after the module case having the plurality of cylindrical battery cells received therein and the cover are coupled to each other.

Specifically, i) a method of coupling the pogo-pin to the cover in the state in which the module case and the cover are assembled and coupling the busbar thereto,
ii) a method of coupling the busbar to the cover in the state in which the module case and the cover are assembled or integrally coupling the busbar and the cover to each other using the pogo-pin in the state in which the busbar is located at the cover, which is a method shown in FIG. 8,
iii) a method of coupling the pogo-pin to the cover, coupling the busbar thereto, and coupling the cover to the module case, or
iv) a method of coupling the busbar to the cover or integrally coupling the busbar and the cover to each other using the pogo-pin in the state in which the busbar is located at the cover and coupling the cover to the module case may be used.

Although not shown in the figures, the module case may be constituted by an upper case and a lower case, and the upper case and the lower case may be separably coupled to each other.

Meanwhile, the battery module may be filled with a phase change material (PCM), which may be injected in a liquid state and may be changed into an insulative solid in the module case. Spaces defined between the plurality of cylindrical battery cells may be filled with the phase change material.

The cylindrical battery cell 3010 is constituted by a lithium secondary battery, which is characterized by an increase in temperature due to heat generated during normal charging and discharging processes. Since the temperature increase in the battery module may cause problems, such as deterioration in function of the battery module, the module case 3100 is filled with the phase change material (PCM) to inhibit an increase in temperature of the battery module.

The phase change material may absorb a certain amount of heat as the state of the phase change material is changed from solid to liquid, whereby it is possible to maintain a constant temperature. Conversely, when the state of the phase change material is changed from liquid to solid, the phase transition material may release latent heat stored therein, whereby it is possible to maintain a constant temperature. The phase change material absorbs heat therearound at a set temperature or higher to keep the temperature low, and releases stored heat to raise the temperature when the temperature of the phase change material falls below the set temperature, and therefore it is possible to maintain a constant temperature.

In the present invention, the phase change material is injected into the module case in a liquid state, and therefore the spaces between the cylindrical battery cells may be filled with the phase change material. When the liquid-state phase change material is changed into solid in the module case, the phase change material exhibits a thermal insulation function, which prevents the spread of flames even though fire breaks out in any one cylindrical battery cell.

When the phase change material is in a liquid state, the phase change material may leak out of the module case. In order to prevent leakage of the phase change material, therefore, it is preferable to inject the phase change material after the cover is coupled to the module case.

### (Description of Reference Numerals)

1000, 2000, 3000: Battery modules
1010, 2010, 3010: Cylindrical battery cells
2020, 3020: Busbars
2030: Weld spot
2040: Wire
1100, 2100, 3100: Module case
3200: Cover
3210: Partition wall
3500: Pogo-pin
3510: Main body
3512: Protrusion
3514: Screw thread
3516: Hook
3518: Screw head
3520: Elastic body
3530: Pin
3532: Pin support portion
3540: Ball
3600: Coupling portion
3610: Coupling portion stopper

## Claims

1. A battery module (3000) comprising:
a plurality of cylindrical battery cells (3010);
a module case (3100) accommodating the plurality of cylindrical battery cells (3010) therein;
a cover (3200) coupled to at least one of open surfaces of the module case (3100);
metal plates coupled to the cover (3200); and
an electrical conduction member (3500) interposed between each of the plurality of cylindrical battery cells (3010) and a corresponding one of the metal plates for electrical connection,
wherein the electrical conduction member (3500) is a pogo-pin, and wherein the electrical conduction member (3500) comprises:
a hollow cylindrical main body (3510);
an elastic body (3520) accommodated in the hollow cylindrical main body (3510); and
a pin (3530) disposed in the hollow cylindrical main body (3510) by insertion and being configured to protrude outward from the hollow cylindrical main body (3510) by a predetermined length while being supported by the elastic body (3520).

2. The battery module (3000) according to claim 1, wherein the electrical conduction member includes one of a single-sided pogo-pin (3500) or a double-sided pogo-pin (3500),
wherein the single-sided pogo-pin (3500) includes the pin (3530) at only one side of the hollow cylindrical main body (3510), and
wherein the double-sided pogo-pin (3500) includes the pin (3530) provided at opposing sides of the hollow cylindrical main body (3510).

3. The battery module (3000) according to claim 1, wherein the hollow cylindrical main body (3510) includes at least one of a screw thread, a hook, a catching projection, or a donut-shaped protrusion disposed on an outer surface of the hollow cylindrical main body (3510).

4. The battery module (3000) according to claim 1, wherein the electrical conduction member (3500) is coupled to the cover (3200) and extends therethrough.

5. The battery module (3000) according to claim 3, wherein the electrical conduction member (3500) is coupled to the cover (3200) and extends therethrough by an interference fit, a hook coupling, a screw coupling, a fusion, and/or coupling between a coupling portion (3600), which is integrally formed with the electrical conduction member (3500) by injection molding, and the cover (3200), by an interference fit, a hook coupling, a screw coupling, and/or a fusion.

6. The battery module (3000) according to claim 1, wherein the cover (3200) and the metal plates are coupled to each other by at least one of a thermal fusion or an interference fit.

7. The battery module (3000) according to claim 1, wherein the metal plates and the electrical conduction member (3500) are coupled to each other after the module case (3100) having the plurality of cylindrical battery cells (3010) received therein and the cover (3200) are coupled to each other.

8. The battery module (3000) according to claim 1, wherein
the module case (3100) includes an upper case and a lower case, and
the upper case and the lower case are separably coupled to each other.

9. The battery module (3000) according to claim 1, wherein the battery module (3000) is filled with a phase change material (PCM) therein.

## Patentansprüche

1. Batteriemodul (3000), umfassend: eine Vielzahl von zylindrischen Batteriezellen (3010); ein Modulgehäuse (3100), das die Vielzahl von zylindrischen Batteriezellen (3010) darin aufnimmt; eine Abdeckung (3200), die mit mindestens einer der offenen Oberflächen des Modulgehäuses (3100) gekoppelt ist; Metallplatten, die mit der Abdeckung (3200) gekoppelt sind; und ein elektrisches Leitungselement (3500), das zwischen jeder der Vielzahl von zylindrischen Batteriezellen (3010) und einer entsprechenden der Metallplatten zur elektrischen Verbindung zwischengeschaltet ist, wobei das elektrische Leitungselement (3500) ein Pogo-Pin ist, und wobei das elektrische Leitungselement (3500) Folgendes umfasst: einen hohlen zylindrischen Hauptkörper (3510); einen elastischen Körper (3520), der in dem hohlen zylindrischen Hauptkörper (3510) aufgenommen ist; und einen Stift (3530), der durch Einsetzen in dem hohlen zylindrischen Hauptkörper (3510) angeordnet und so konfiguriert ist, dass er von dem hohlen zylindrischen Hauptkörper (3510) um eine vorbestimmte Länge nach außen vorsteht, während er von dem elastischen Körper (3520) getragen wird.

2. Batteriemodul (3000) nach Anspruch 1, wobei das elektrische Leitungselement eines von einem einseitigen Pogo-Pin (3500) oder einem zweiseitigen Pogo-Pin (3500) enthält, wobei der einseitige Pogo-Pin (3500) den Stift (3530) an nur einer Seite des hohlen zylindrischen Hauptkörpers (3510) enthält, und wobei der zweiseitige Pogo-Pin (3500) den Stift (3530) enthält, der an gegenüberliegenden Seiten des hohlen zylindrischen Hauptkörpers (3510) vorgesehen ist.

3. Batteriemodul (3000) nach Anspruch 1, wobei der hohle zylindrische Hauptkörper (3510) mindestens eines von einem Schraubengewinde, einem Haken, einem Fangvorsprung oder einem ringförmigen Vorsprung enthält, der an einer Außenfläche des hohlen zylindrischen Hauptkörpers (3510) angeordnet ist.

4. Batteriemodul (3000) nach Anspruch 1, wobei das elektrische Leitungselement (3500) mit der Abdeckung (3200) gekoppelt ist und sich durch diese hindurch erstreckt.

5. Batteriemodul (3000) nach Anspruch 3, wobei das elektrische Leitungselement (3500) mit der Abdeckung (3200) gekoppelt ist und sich durch diese hindurch erstreckt mittels einer Presspassung, einer Hakenkupplung, einer Schraubkupplung, einer Verschmelzung und/oder einer Kopplung zwischen einem Kupplungsabschnitt (3600), der durch Spritzgießen einstückig mit dem elektrischen Leitungselement (3500) ausgebildet ist, und der Abdeckung (3200), mittels einer Presspassung, einer Hakenkupplung, einer Schraubkupplung und/oder einer Verschmelzung.

6. Batteriemodul (3000) nach Anspruch 1, wobei die Abdeckung (3200) und die Metallplatten durch mindestens eines von einer thermischen Verschmelzung oder einer Presspassung miteinander gekoppelt sind.

7. Batteriemodul (3000) nach Anspruch 1, wobei die Metallplatten und das elektrische Leitungselement (3500) miteinander gekoppelt werden, nachdem das Modulgehäuse (3100) mit der darin aufgenommenen Vielzahl von zylindrischen Batteriezellen (3010) und die Abdeckung (3200) miteinander gekoppelt sind.

8. Batteriemodul (3000) nach Anspruch 1, wobei das Modulgehäuse (3100) ein oberes Gehäuse und ein unteres Gehäuse enthält, und das obere Gehäuse und das untere Gehäuse trennbar miteinander gekoppelt sind.

9. Batteriemodul (3000) nach Anspruch 1, wobei das Batteriemodul (3000) darin mit einem Phasenwechselmaterial (PCM) gefüllt ist.

## Revendications

1. Module de batterie (3000) comprenant : une pluralité de cellules de batterie cylindriques (3010) ; un boîtier de module (3100) logeant la pluralité de cellules de batterie cylindriques (3010) à l'intérieur de celui-ci ; un couvercle (3200) couplé à au moins l'une des surfaces ouvertes du boîtier de module (3100) ; des plaques métalliques couplées au couvercle (3200) ; et un élément de conduction électrique (3500) interposé entre chacune de la pluralité de cellules de batterie cylindriques (3010) et une plaque correspondante des plaques métalliques pour une connexion électrique, dans lequel l'élément de conduction électrique (3500) est une broche pogo, et dans lequel l'élément de conduction électrique (3500) comprend : un corps principal cylindrique creux (3510) ; un corps élastique (3520) logé dans le corps principal cylindrique creux (3510) ; et une broche (3530) disposée dans le corps principal cylindrique creux (3510) par insertion et étant configurée pour faire saillie vers l'extérieur depuis le corps principal cylindrique creux (3510) d'une longueur prédéterminée tout en étant supportée par le corps élastique (3520).

2. Module de batterie (3000) selon la revendication 1, dans lequel l'élément de conduction électrique inclut l'un parmi une broche pogo simple face (3500) ou une broche pogo double face (3500), dans lequel la broche pogo simple face (3500) inclut la broche (3530) sur un seul côté du corps principal cylindrique creux (3510), et dans lequel la broche pogo double face (3500) inclut la broche (3530) prévue sur des côtés opposés du corps principal cylindrique creux (3510).

3. Module de batterie (3000) selon la revendication 1, dans lequel le corps principal cylindrique creux (3510) inclut au moins l'un parmi un filetage, un crochet, une saillie d'accrochage ou une saillie en forme de beignet disposée sur une surface extérieure du corps principal cylindrique creux (3510).

4. Module de batterie (3000) selon la revendication 1, dans lequel l'élément de conduction électrique (3500) est couplé au couvercle (3200) et s'étend à travers celui-ci.

5. Module de batterie (3000) selon la revendication 3, dans lequel l'élément de conduction électrique (3500) est couplé au couvercle (3200) et s'étend à travers celui-ci au moyen d'un ajustement serré, d'un couplage par crochet, d'un couplage par vis, d'une fusion, et/ou d'un couplage entre une partie de couplage (3600), qui est formée d'un seul tenant avec l'élément de conduction électrique (3500) par moulage par injection, et le couvercle (3200), au moyen d'un ajustement serré, d'un couplage par crochet, d'un couplage par vis, et/ou d'une fusion.

6. Module de batterie (3000) selon la revendication 1, dans lequel le couvercle (3200) et les plaques métalliques sont couplés l'un à l'autre par au moins l'un d'une fusion thermique ou d'un ajustement serré.

7. Module de batterie (3000) selon la revendication 1, dans lequel les plaques métalliques et l'élément de conduction électrique (3500) sont couplés l'un à l'autre après que le boîtier de module (3100) contenant la pluralité de cellules de batterie cylindriques (3010) et le couvercle (3200) sont couplés l'un à l'autre.

8. Module de batterie (3000) selon la revendication 1, dans lequel le boîtier de module (3100) inclut un boîtier supérieur et un boîtier inférieur, et le boîtier supérieur et le boîtier inférieur sont couplés de manière séparable l'un à l'autre.

9. Module de batterie (3000) selon la revendication 1, dans lequel le module de batterie (3000) est rempli d'un matériau à changement de phase (MCP) à l'intérieur.
